# FASCICULE DE BREVET EUROPEEN

(11) **EP 1 011 179 B1**
(45) Date de publication et mention de la délivrance du brevet: **09.05.2007**
(21) Numéro de dépôt: 99410163.2
(22) Date de dépôt: 18.11.1999
(51) Int. Cl.: H02B 1/20

(54) **Appareillage électronique composé d'un ou de plusieurs appareils, et comportant sur une meme face de raccordement des bornes d'entrée et des bornes de sortie**
Aus einem oder mehreren Geräten bestehende elektronische Apparatur, mit Eingangs-/Ausgangsanschlüssen auf demselben Verbindungsvorderteil
Electronic device consisting of one or more apparatuses, and having in and out terminals on a same connecting front

(30) Priorité: 15.12.1998 FR 9815958
(43) Date de publication de la demande: 21.06.2000
(73) Titulaire: SCHNEIDER ELECTRIC INDUSTRIES SAS, 92500 Rueil-Malmaison (FR)
(72) Inventeur: Caire, Jean, Schneider Electric Industries SA, 38050 Grenoble Cédex 09 (FR)
(74) Mandataire: Ritzenthaler, Jacques

(56) Documents cités:
- EP-A- 0 387 158
- EP-A- 0 729 167

## Description

L'invention concerne un appareillage électrique composé d'un seul appareil ou de deux appareils électriques modulaires, tel un disjoncteur différentiel ou un disjoncteur associé à un contacteur, le ou lesdits appareil(s) étant destiné(s) à être accolé(s) et relié(s) électriquement à un appareil adjacent sur un rail de montage et étant logé(s) dans des boîtiers, chaque boîtier comprenant une face arrière par laquelle le boîtier est monté sur le rail, une face avant, deux faces principales parallèles par lesquelles les boîtiers sont accolés deux à deux et deux faces latérales opposées dont l'une au moins, dite face de raccordement, comporte des bornes de raccordement disposées sur au moins un niveau de profondeur, la face de raccordement de l'appareil lorsqu'il est seul, ou la face de raccordement constituée par les deux faces de raccordement réunies des deux appareils, lorsqu'ils sont deux, comporte à la fois un ensemble d'orifices logeant des bornes d'entrée et un ensemble d'orifices logeant des bornes de sortie, lesdites bornes étant destinées à être raccordées électriquement à des câbles, des peignes ou analogues.

On connaît le document EP-A-0387158 décrivant un dispositif comportant les caractéristiques précédentes.
L'invention s'applique aussi bien à des appareillages du type monobloc tels un disjoncteur différentiel, comportant sur une même face des bornes d'entrée et des bornes de sortie, qu'à des appareillages composés de deux appareils accolés montés sur un rail tels un disjoncteur associé à un contacteur, l'un des appareils comportant sur une face latérale, des bornes d'entrée, alors que l'autre appareil comporte sur une face latérale située dans le prolongement de celle du premier appareil, des bornes de sortie.
Dans ces deux cas en effet, il y a un risque que par inadvertance, et de manière intempestive, deux dents distinctes d'un peigne engagent respectivement une borne d'entrée et une borne de sortie situées à un même niveau de profondeur, ce qui conduirait à une détérioration des appareils et donc à ce que la sécurité électrique recherchée ne soit pas assurée.

La présente invention résout ce problème et propose un appareillage électrique permettant d'empêcher de relier électriquement une borne d'entrée et une borne de sortie de même niveau de profondeur, au moyen d'une barre d'alimentation.

A cet effet, la présente invention a pour objet un appareillage du type précédemment mentionné selon la revendication 1.
Selon une caractéristique particulière, ladite face de raccordement comporte, entre l'ensemble des bornes d'entrée et l'ensemble des bornes de sortie, une portion de paroi libre E située entre deux modules adjacents et dont la largeur parallèlement à l'alignement des bornes d'un même niveau de profondeur est supérieure ou égale à 9 mm.

Ainsi, grâce à l'invention, deux dents consécutives d'un peigne ne peuvent pas être engagées simultanément dans, respectivement, une borne d'entrée et une borne de sortie.

Les avantages et caractéristiques ressortiront plus clairement de la description suivante de modes particuliers de réalisation, donnés uniquement à titre d'exemples, et représentés aux dessins annexés dans lesquels :
- la figure 1 est une représentation schématique d'un appareillage électrique selon l'invention, vu de l'avant,
- les figures 1a, 1b et 1c illustrent respectivement, dans des vues identiques à la précédente, trois autres réalisations d'un appareillage selon l'invention,
- la figure 2 illustre, dans une vue similaire aux précédentes, un appareillage selon l'invention comportant deux jeux de bornes de sortie.
- les figures 3 et 3a illustrent l'appareillage de la figure 2, auquel à été associé un volet d'obturation de certaines des bornes.

Sur les figures, on voit un appareillage électrique A composé de deux appareils, à savoir un disjoncteur 1 et un bloc différentiel 2, les dits appareils étant montés en série sur un rail de montage en étant accolés par l'une 4,5 de leurs faces latérales.
Ces appareils 1,2 sont logés dans des boîtiers modulaires de forme sensiblement parallélépipèdique comprenant chacun une face arrière (non visible) par laquelle les appareils sont montés sur le rail, deux faces dites principales 3,4 et 5,6 parallèles, par lesquelles les boîtiers sont accolés deux à deux, deux faces latérales 7,8 et 9,10, dites faces de raccordement, parallèles, respectivement inférieure et supérieure, et une face avant 11,12 parallèle à la face arrière

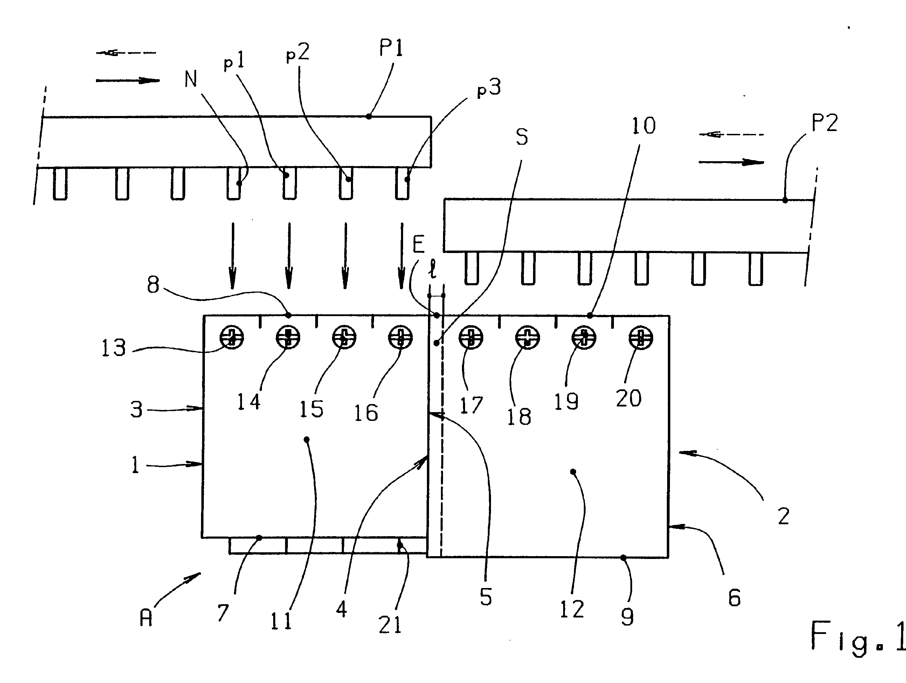

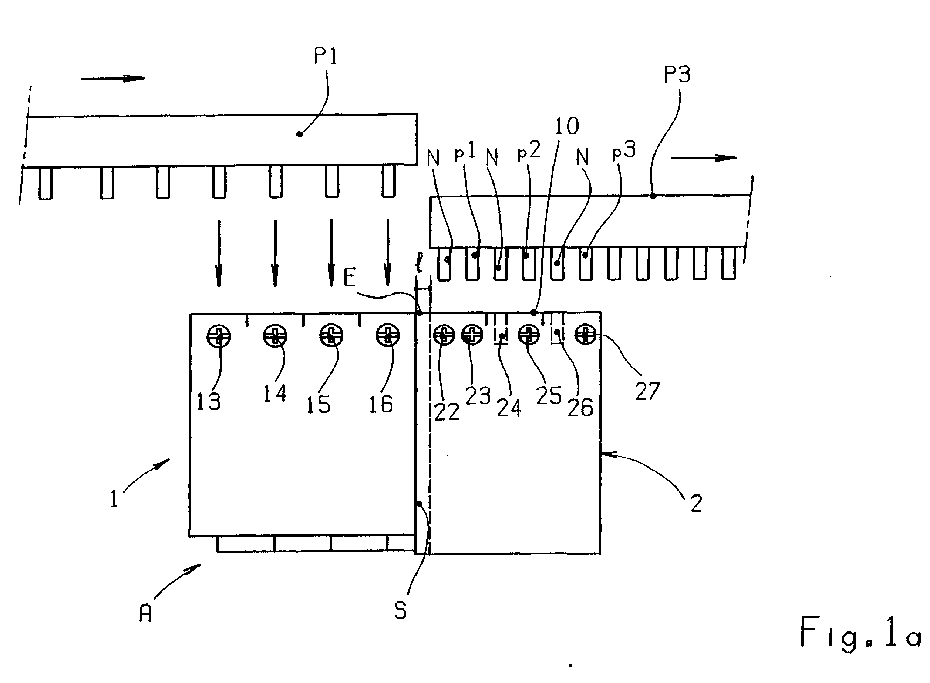

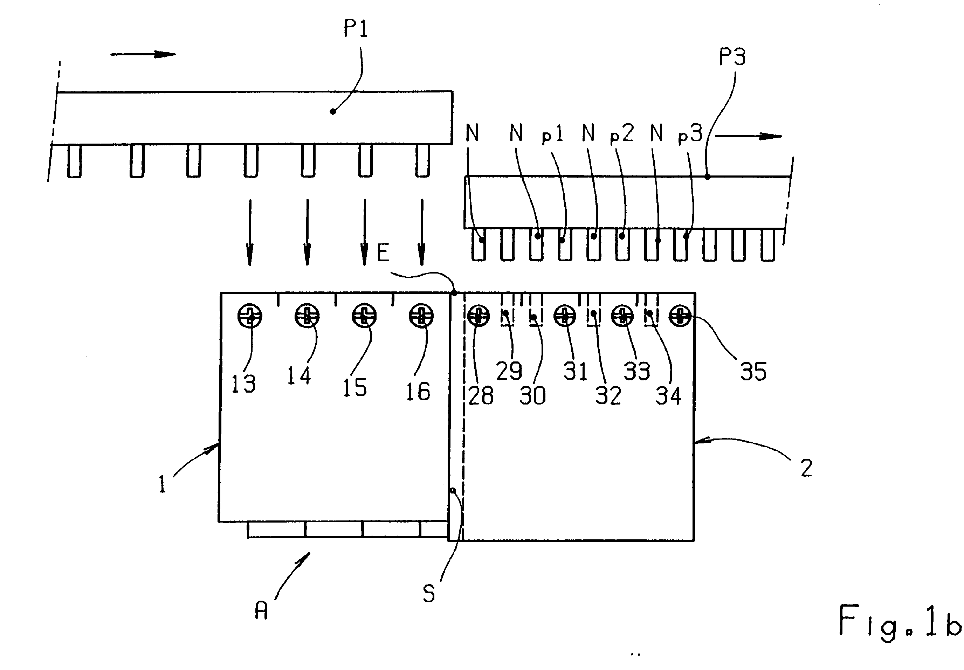

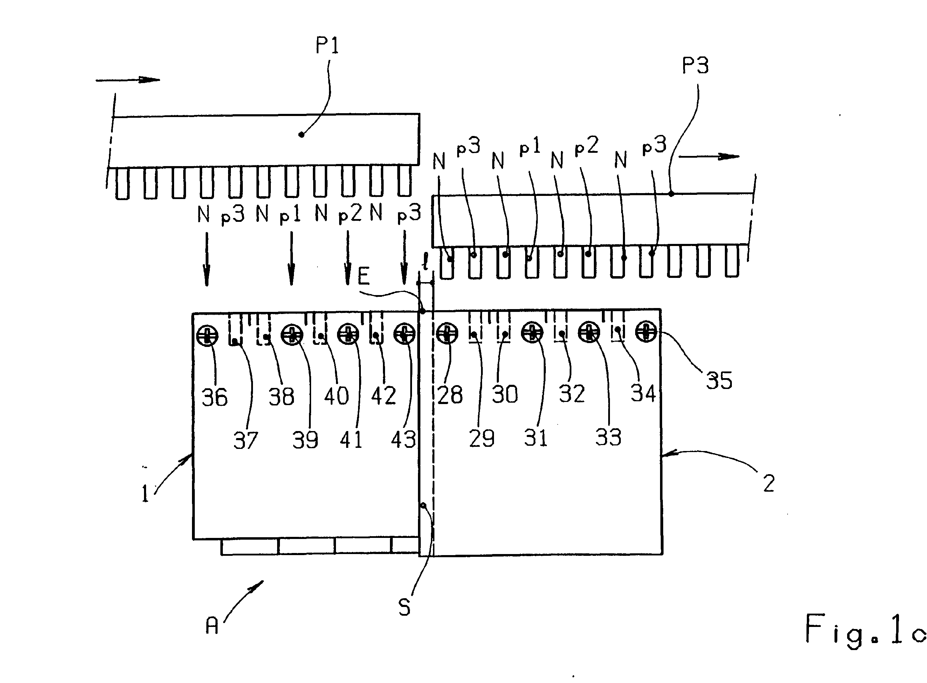

Sur la figure 1, les deux appareils sont du type trois phase plus neutre et sont constitués chacun de quatre modules comportant respectivement un circuit de neutre et trois circuits de phase. Le premier appareil 1 comporte sur sa face de raccordement supérieure 8 quatre bornes d'entrée 13 à 16 respectivement une borne de neutre 13 et trois bornes de phase 14 à 16. Les bornes de sortie (non représentées) du premier appareil 1 sont raccordées électriquement aux bornes d'entrée du second appareil 2 par des conducteurs rigides 21. Le premier appareil 1 est alimenté en amont par un peigne P1 comportant des dents également espacées et délivrant successivement et de manière répétitive le neutre N et les trois phases p1,p2,p3. Le second appareil 2 alimente d'autres appareils (non représentés) situés en aval, par l'intermédiaire d'un peigne P2, du même type que le précédent. Le pas des peignes, correspondant à la distance entre deux dents consécutives, est de 18 mm. Le pas des appareils, correspondant à la distance entre deux bornes d'entrée 13 à 16, pour le premier, et à la distance entre deux bornes de sortie 17 à 20, pour le second, est également de 18 mm. On notera que dans le cas ou les bornes sont réparties sur deux niveaux (ou plus) de profondeur, le pas correspondra à la distance entre deux bornes (ou deux dents) consécutives ramenée dans un plan parallèle à l'alignement des bornes d'un même niveau de profondeur.
Selon l'invention, le boîtier du second appareil 2 comporte, s'étendant en direction du premier appareil 1, un prolongement formant une surépaisseur S du boîtier, et dont la largeur 1 est avantageusement de 18 mm. Cette surépaisseur S permet la création d'une portion de paroi libre E sur la face de raccordement 10 du second appareil 2
Ainsi, lors d'une opération de raccordement, lorsqu'un opérateur tentera par mégarde de raccorder électriquement les bornes d'entrée et les bornes de sortie, l'une des dents du peigne sera amenée en butée contre la paroi précitée E, ce qui empêchera l'introduction des autres dents dans les bornes et évitera donc le raccordement électrique d'une borne d'entrée et d'une borne de sortie.

Sur la figure 1a, on voit également deux appareils électriques pouvant être un disjoncteur 1 et un bloc différentiel 2, les deux appareils étant du type tripolaire et neutre. Le premier appareil 1 est le même que celui précédemment décrit sur la figure 1, mais le second appareil 2 ne comporte plus que trois modules de 18 mm, chaque module comportant une combinaison de bornes et de logements 22 à 27. Dans chaque module, le premier emplacement correspond au neutre tandis que le second emplacement correspond à une phase. Ainsi, le premier module comporte une borne 22 pour le neutre et une borne 23 pour la phase 1 ; le second module comporte un logement 24 destiné à loger une dent de neutre du peigne non utilisée et une borne 25 de phase 2; et le troisième module comporte un logement 26 pour une dent de neutre et une borne 27 pour la phase 3. Le premier appareil 1 comporte des bornes 13 à 16 (respectivement une borne 13 de neutre et trois bornes de phase 14 à 16), espacées mutuellement de 18 mm. Cet appareil est donc alimenté par un peigne dont le pas est de 18 mm. Le second appareil 2 alimente un peigne P3 du type phase/neutre dont les dents distribuent successivement le neutre et les différentes phases 1,2 et 3, et ce de manière répétitive le long du peigne P3.
Selon l'invention, le boîtier du second appareil 2 comporte également une partie formant surépaisseur S s'étendant au delà du bord extérieur du premier module et formant une partie de paroi libre E sur la face de raccordement 10 du second appareil 2. La largeur 1 de cette surépaisseur S est avantageusement de 18 mm. Ainsi, ni un peigne présentant un pas de 9 mm, ni un peigne présentant un pas de 18 mm, ne peut relier électriquement et intempestivement une borne d'entrée et une borne de sortie.
Selon la réalisation de la figure 1b, le second appareil 2, également du type tripolaire et neutre, comporte quatre modules. Cette disposition en quatre modules peut être nécessaire par exemple lorsque l'appareil présente une dissipation thermique importante. Le premier de ces modules comporte une borne 28 pour le neutre et un logement 29 pour une dent de phase non utilisée. Le second module comporte un logement 30 pour une dent de neutre non utilisée et une borne 31 de phase 1. Le troisième module comporte un logement 32 pour une dent de neutre non utilisée et une borne 33 de phase 2. Et le quatrième module comporte un logement 34 pour une dent de neutre non utilisée et une borne 35 de phase 3. Le premier appareil 1 est alimenté par un peigne P1 d'un pas de 18 mm, tandis que le second appareil 2 alimente un peigne P3 dont le pas est de 9 mm. La partie en saillie S du boîtier du second appareil 2 étant d'une largeur d'environ 18 mm, la distance entre la dernière borne 16 du premier appareil 1 et la première borne 28 du second appareil 2 est d'environ 31,5 mm (9+18+4,5), d'où il résulte que ni un peigne d'un pas de 18 mm, ni un peigne d'un pas de 9 mm ne pourra relier intempestivement une borne d'entrée du premier appareil 1 et une borne de sortie du second appareil 2.
Selon la réalisation illustrée sur la figure 1c, les deux appareils sont du type tripolaire et neutre en quatre modules et sont alimentés par un peigne du type phase plus neutre, comportant une dent de neutre N entre deux dents de phase successives p1,p2,p3. Le premier appareil 1 comporte successivement une borne de neutre 36, deux évidements 37,38, une borne 39 de phase 1, un évidement 40, une borne 41 de phase 2, un évidement 42 et une borne 43 de phase 3. Le second appareil 2 comporte, disposés successivement, une borne de neutre 28, deux logements 29,30, une borne 31 de phase 1, un logement 32, une borne 33 de phase 2, un logement 34 et une borne 35 de phase 3. Selon cette réalisation, la largeur 1 de la surépaisseur S étant de 18 mm, la distance entre la dernière borne de phase 43 du premier appareil 1 et la première borne de neutre 28 du second appareil 2 est d'environ 27 mm (4,5 +18+ 4,5), d'où il résulte que ni un peigne de pas de 9 mm, ni un peigne de pas de 18 mm ne peut être utilisé pour relier électriquement une borne d'entrée et une borne de sortie.

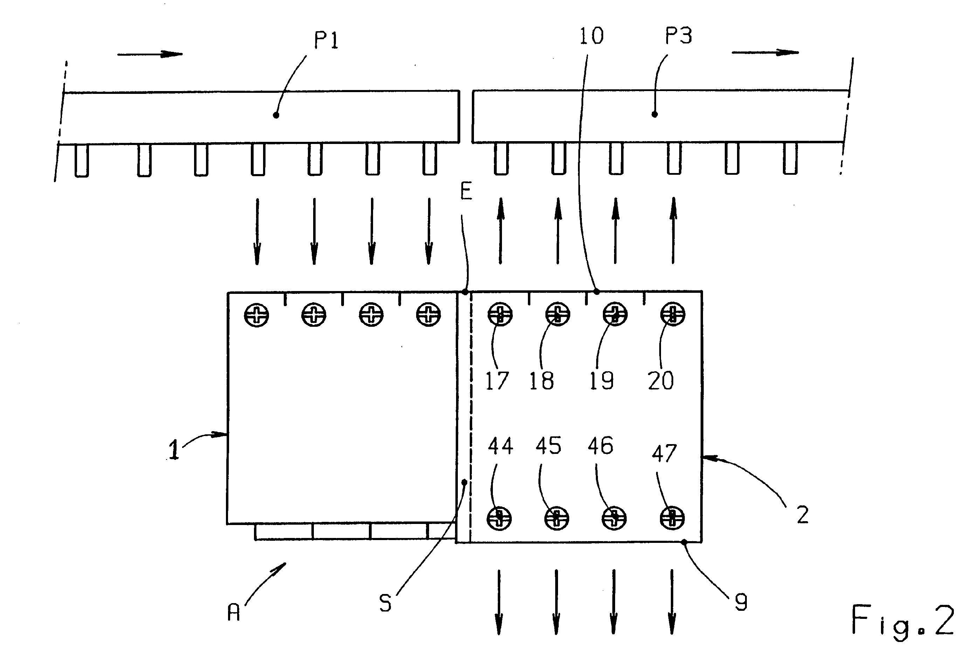

Sur la figure 2, le second appareil 2 est constitué par quatre modules de 18 mm. Il comporte, sur l'une 10 de ses faces de raccordement, quatre bornes 17 à 20, respectivement, une borne de neutre 17 et trois bornes de phase 18 à 20. Cet appareil comporte en outre, sur sa face inférieure 9, un même nombre de bornes de sortie 44 à 47 destinées à alimenter une autre série d'appareils (non représentés) situés en aval, au moyen de câbles.

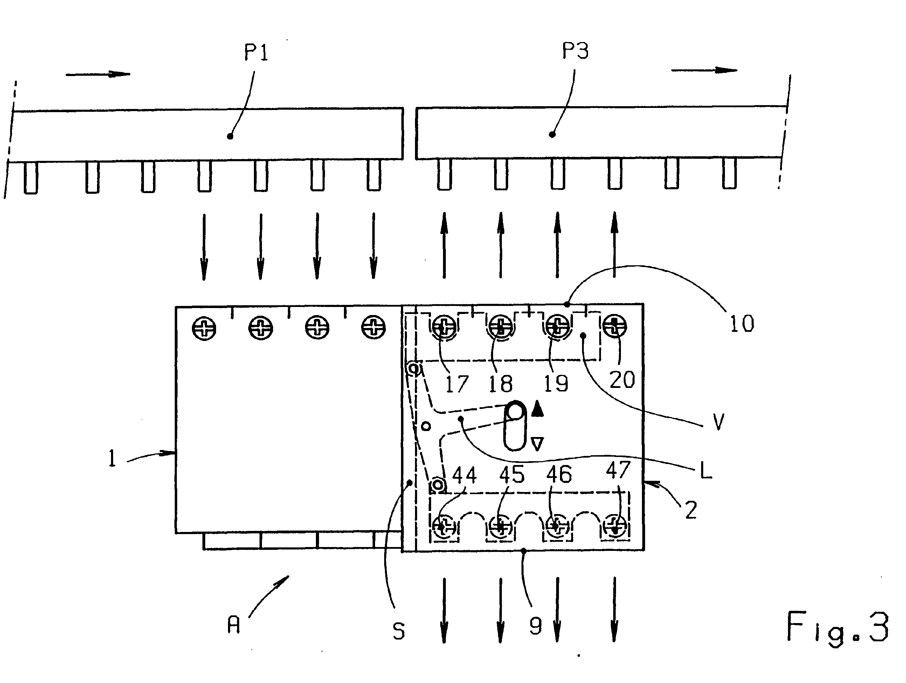

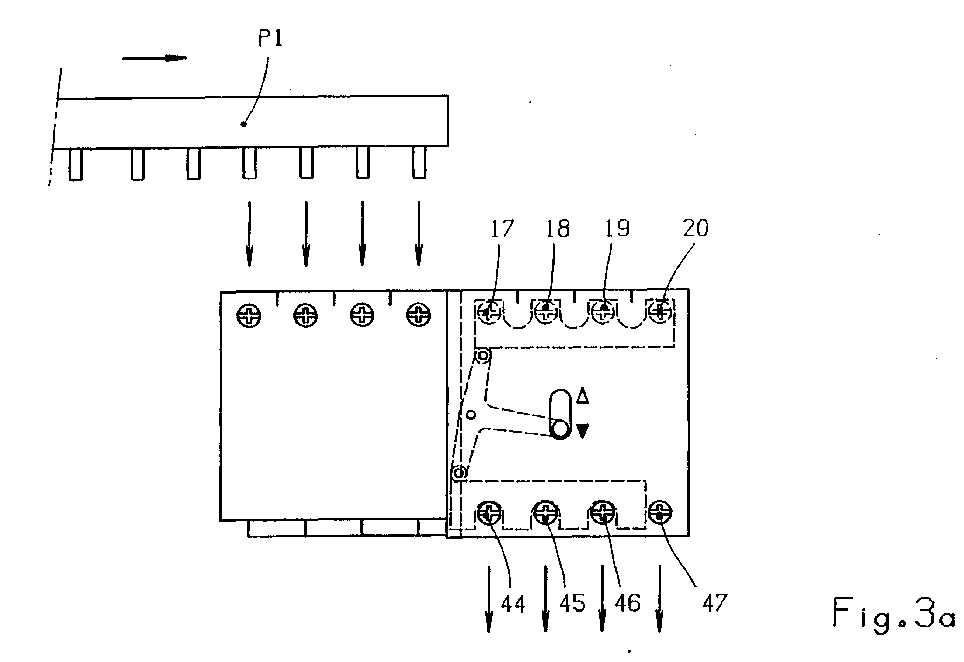

Sur la figure 3, le second appareil 2 comporte un même nombre de bornes de sortie 17 à 20 et 44 à 47 sur ses deux faces opposées 9,10. Il comporte également un volet orientable V constitué de deux demi volets en forme de rateau et manoeuvré par un levier à deux positions stables. Cet appareil 2 comporte également une surépaisseur S correspondant à un demi-module et logeant une partie du mécanisme du volet orientable. Ce demi-module est destiné selon l'invention à servir de détrompage, c'est à dire à empêcher le raccordement intempestif entre une borne d'entrée et une borne de sortie. Sur cette figure 3, le volet V permet l'accès aux bornes supérieures 17 à 20, mais empêche l'accès aux bornes inférieures 44 à 47. Sur la figure 3a, le volet V obture l'accès aux bornes supérieures 17 à 20, mais libère l'accès aux bornes inférieures 44 à 47 lesquelles sont reliées à des câbles.

L'invention s'applique particulièrement à des appareillages comprenant un appareil de tête tel un disjoncteur ou un interrupteur, différentiel ou non, ledit appareil de tête étant associé en aval à un appareil destiné à être protégé par l'appareil de tête tel un contacteur ou un télérupteur.

Bien que les différentes figures de ce brevet illustrent l'association de deux appareils, l'invention s'applique également aux appareils monoblocs tels que par exemple les disjoncteurs différentiels.

De façon plus générale, l'invention s'applique à tout appareil ou association d'appareils présentant sur une même face de raccordement, des bornes d'entrée et des bornes de sortie, le ou l'un au moins desdits appareils étant destiné à être raccordé électriquement à d'autres appareils au moyen d'un peigne, ou au choix, avec des câbles ou un peigne.

Bien entendu, l'invention n'est pas limitée aux modes de réalisation décrits et illustrés qui n'ont été donnés qu'à titre d'exemples.

C'est ainsi que, par exemple, la partie de paroi libre pourra être formée par un module intermédiaire indépendant interposé entre deux modules accolés.

## Revendications

1. Appareillage électrique composé d'un seul appareil ou de deux appareils électriques modulaires, tel un disjoncteur différentiel ou un disjoncteur associé à un contacteur, le ou lesdits appareil(s) (1, 2) étant destiné(s) à être accolé(s) et relié(s) électriquement à un appareil adjacent sur un rail de montage et étant logé(s) dans des boîtiers, chaque boîtier comprenant une face arrière par laquelle le boîtier est monté sur le rail, une face avant (11,12), deux faces principales parallèles (3, 4) et (5, 6) par lesquelles les boîtiers sont accolés deux à deux et deux faces latérales opposées (7,8) et (9, 10) dont l'une au moins, dite face de raccordement, comporte des bornes de raccordement disposées sur au moins un niveau de profondeur, la face de raccordement de l'appareil, lorsqu'il est seul, ou la face de raccordement constituée par les deux faces de raccordement réunies des deux appareils, lorsqu'ils sont deux, comporte à la fois un ensemble d'orifices logeant des bornes d'entrée (13 à 16) et 36 à (43) et un ensemble d'orifices logeant des bornes de sortie (17 à 20, 22 à 27, 28 à 35) lesdites bornes étant destinées à être raccordées électriquement à des câbles, un peigne ou analogue, **caractérisé en ce que** ladite face de raccordement (8,10) comporte, entre l'ensemble des bornes d'entrée (13 à 16 et 36 à 43) et l'ensemble des bornes de sortie (17 à 20, 22 à 27, 28 à 35), une portion de paroi libre E dont la largeur 1 parallèlement à l'alignement desdites bornes d'un même niveau de profondeur est telle que cette portion de paroi serve de butée aux dents d'un peigne de manière à éviter le raccordement intempestif au moyen dudit peigne entre une borne d'entrée et une borne de sortie.

2. Appareillage électrique selon la revendication 1, **caractérisé en ce que** ladite face de raccordement (8,10) comporte, entre l'ensemble des bornes d'entrée et l'ensemble des bornes de sortie, une portion de paroi libre E située entre deux modules adjacents et dont la largeur parallèlement à l'alignement des bornes d'un même niveau de profondeur est supérieure ou égale à 9 mm.

3. Appareillage selon la revendication 1 ou 2, **caractérisé en ce que** l'appareillage étant composé de deux appareils (1,2), la portion de paroi libre E est formée par une surépaisseur S du boîtier de l'un des appareils.

4. Appareillage selon l'une quelconque des revendications précédentes, **caractérisé en ce qu'**il comprend un premier appareil de protection électrique (1) comportant les bornes d'entrées précitées (13 à 16) et un second appareil (2) monté en série avec le premier (1) de manière à être protégé par le premier, et comportant les bornes de sortie précitées (17 à 20).

5. Appareillage selon la revendication 4, **caractérisé en ce que** le premier appareil (1) est un interrupteur, un interrupteur différentiel, un disjoncteur ou un disjoncteur différentiel.

6. Appareillage selon la revendication 4 ou 5, **caractérisé en ce que** le second appareil (2) est un contacteur ou un télérupteur.

7. Appareillage selon l'une quelconque des revendications 4 à 6, **caractérisé en ce que** les bornes d'entrée (13 à 16) du premier appareil (1) sont alimentées par des câbles, tandis que les bornes de sortie (17 à 20) du second appareil (2) alimentent un peigne P2 formé d'au moins une barre d'alimentation et destiné à assurer l'alimentation d'autres appareils.

8. Appareillage selon l'une quelconque des revendications précédentes, **caractérisé en ce que** le second appareil (2) comporte sur sa face latérale (9) opposée à la précédente (10), un autre ensemble de bornes de sortie (44 à 47) destinées à servir classiquement de départ.

9. Appareillage selon l'une quelconque des revendications 4 à 8, **caractérisé en ce que** le second appareil (2) est réversible sur le rail, de manière que ses bornes de sortie (17 à 20 et 44 à 47) assurent soit l'alimentation d'un peigne d'un côté du rail, soit l'alimentation par câbles d'une autre série d'appareils, de l'autre côté du rail.

10. Appareillage selon l'une quelconque des revendications précédentes, **caractérisé en ce que** les bornes de sortie (28 à 35) du second appareil (2) et/ou respectivement les bornes d'entrée (36 à 43) du premier appareil (1) sont reliées électriquement à un peigne P1, P3 distribuant successivement le neutre et différentes phases p1,p2,p3, et ce de manière répétitive, avec interposition d'une dent N distribuant le neutre N entre deux dents de phase successives, lesdites dents étant séparées deux à deux d'une distance de 9 mm.

11. Appareillage selon l'une quelconque des revendications précédentes, **caractérisé en ce que** la largeur 1 de la portion de paroi libre E, parallèlement à l'alignement des bornes d'un même niveau de profondeur, est sensiblement de 18mm.

## Claims

1. Electrical switchgear unit composed of a single apparatus or of two modular electrical apparatuses, such as a differential circuit breaker or a circuit breaker associated with a contactor, the or said apparatus(es) (1,2) being designed to be adjoined and electrically connected to an adjacent apparatus on a fitting rail and being housed in cases, each case comprising a rear panel whereby the case is fitted on the rail, a front panel (11,12), two parallel main panels (3,4 and 5,6) whereby the cases are adjoined two by two, and two opposite side panels (7,8 and 9,10) at least one whereof, called the connection panel, comprises connection terminals arranged on at least one depth level, the connection panel of the apparatus when a single apparatus is involved, or the connection panel formed by the two adjoined connection panels of the two apparatuses when there are two apparatuses, comprises both a set of holes housing input terminals (13 to 16 and 36 to 45) and a set of holes housing output terminals (17 to 20, 22 to 27, 28 to 35), said terminals being designed to be electrically connected to cables, a comb connector or the like, **characterized in that** said connection panel (8,10) comprises, between the set of input terminals (13 to 16 and 36 to 43) and the set of output terminals (17 to 20, 22 to 27, 28 to 35), a portion of free wall E the width whereof 1 parallel to the alignment of said terminals of the same depth level is such that this portion of wall acts as a stop for the teeth of a comb connector so as to prevent unscheduled connection by means of said comb connector between an input terminal and an output terminal.

2. Electrical switchgear according to claim 1, **characterized in that** said connection panel (8,10) comprises, between the set of input terminals and the set of output terminals, a portion of free wall E situated between two adjacent modules the width whereof parallel to the alignment of the terminals of the same depth level is greater than or equal to 9 mm.

3. Switchgear apparatus according to claim 2, **characterized in that** the switchgear apparatus being composed of two apparatuses (1,2), the portion of free wall E is formed by an extra thickness S of the case of one of the apparatuses.

4. Switchgear apparatus according to any one of the foregoing claims, **characterized in that** it comprises a first electrical protection apparatus (1) comprising the above-mentioned input terminals (13 to 16) and a second apparatus (2) connected in series with the first apparatus (1) so as to be protected by the first apparatus, and comprising the above-mentioned output terminals (17 to 20).

5. Switchgear apparatus according to claim 4, **characterized in that** the first apparatus (1) is a switch, a differential switch, a circuit breaker or a differential circuit breaker.

6. Switchgear apparatus according to claim 4 or 5, **characterized in that** the second apparatus (2) is a contactor or a remote-controlled switch.

7. Switchgear apparatus according to any one of the claims 4 to 6, **characterized in that** the input terminals (13 to 16) of the first apparatus (1) are supplied by cables, whereas the output terminals (17 to 20) of the second apparatus (2) supply a comb connector P2 formed by at least one power supply bar and designed to perform power supply of other apparatuses.

8. Switchgear apparatus according to any one of the foregoing claims, **characterized in that** the second apparatus (2) comprises on the side panel (9) thereof opposite the previous side panel (10), another set of output terminals (44 to 47) designed to act in conventional manner as feeders.

9. Switchgear apparatus according to any one of the claims 4 to 8, **characterized in that** the second apparatus (2) is reversible on the rail so that the output terminals (17 to 20 and 44 to 47) thereof perform either power supply of a comb connector on one side of the rail or power supply by cables of another series of apparatuses on the other side of the rail.

10. Switchgear apparatus according to any one of the foregoing claims, **characterized in that** the output terminals (28 to 35) of the second apparatus (2) and/or respectively the input terminals (36 to 43) of the first apparatus (1) are electrically connected to a comb connector P1, P3 successively distributing the neutral and different phases p1, p2, p3, in repetitive manner, with a tooth N distributing the neutral N interposed between two successive phase teeth, said teeth being separated two by two by a distance of 9 mm.

11. Switchgear apparatus according to any one of the foregoing claims, **characterized in that** the width 1 of the portion of free wall E parallel to the alignment of the terminals of the same depth level is appreciably 18 mm.

## Patentansprüche

1. Schaltgeräteanordnung bestehend aus einem Schaltgerät oder zwei modularen Schaltgeräten, wie beispielsweise einem Fehlerstromleistungsschalter oder einem Leistungsschalter mit zugeordnetem Hilfskontakt, welches Schaltgerät dazu dient/welche Schaltgeräte (1, 2) dazu dienen, auf einer Tragschiene nebeneinander montiert und mit einem angrenzenden Schaltgerät elektrisch verbunden zu werden, und in Gehäusen angeordnet sind, von denen jedes eine Rückseite, mit der das Schaltgerät auf der Tragschiene montiert ist, eine Vorderseite (11, 12), zwei parallel zueinander angeordnete Hauptseiten (3, 4 und 5, 6), mit denen die Schaltgeräte paarweise aneinandergereiht werden, sowie zwei einander gegenüberliegende Seitenflächen (7, 8 und 9, 10) umfasst, von denen mindestens eine, als Anschlussseite bezeichnete Seitenfläche in mindestens einer Tiefenebene angeordnete Anschlussklemmen aufweist und auf der Anschlussseite des Einzelschaltgeräts bzw. bei Verwendung von zwei Schaltgeräten, auf der durch die miteinander verbundenen Anschlussseiten der beiden Schaltgeräte gebildeten Anschlussseite sowohl mehrere Aufnahmen mit darin gelagerten Eingangsklemmen (13 bis 16 und 36 bis 43) als auch mehrere Aufnahmen mit darin gelagerten Ausgangsklemmen (17 bis 20, 22 bis 27, 28 bis 35) ausgebildet sind, welche Klemmen dazu dienen, mit Kabeln oder mit einer Kammschiene o.ä. elektrisch verbunden zu werden, **dadurch gekennzeichnet, dass** die genannte Anschlussseite (8, 10) zwischen der Gruppe der Eingangsklemmen (13 bis 16 und 36 bis 43) und der Gruppe der Ausgangsklemmen (17 bis 20, 22 bis 27, 28 bis 35) einen freien Wandabschnitt E umfasst, dessen parallel zur Flucht der genannten Klemmen in der gleichen Tiefenebene gemessene Breite I so bemessen ist, dass dieser Wandabschnitt als Anschlag für die Zähne einer Kammschiene dient, um so die Herstellung einer ungewollten elektrischen Verbindung zwischen einer Eingangsklemme und einer Ausgangsklemme über die genannte Kammschiene zu verhindern.

2. Schaltgeräteanordnung nach Anspruch 1, **dadurch gekennzeichnet, dass** die genannte Anschlussseite (8, 10) einen zwischen der Gruppe der Eingangsklemmen und der Gruppe der Ausgangsklemmen ausgebildeten freien Wandabschnitt E umfasst, der zwischen zwei aneinandergrenzenden Modulen ausgebildet ist und dessen parallel zur Flucht der Klemmen in der gleichen Tiefenebene gemessene Breite größer oder gleich 9 mm ist.

3. Schaltgeräteanordnung nach Anspruch 1 oder 2, **dadurch gekennzeichnet, dass** bei Bildung der Schaltgeräteanordnung durch zwei Schaltgeräte (1, 2) der freie Wandabschnitt E durch einen Überstand S des Gehäuses eines der Schaltgeräte gebildet wird.

4. Schaltgeräteanordnung nach irgendeinem der vorhergehenden Ansprüche, **dadurch gekennzeichnet, dass** sie ein als Schutzorgan ausgelegtes erstes elektrisches Schaltgerät (1), in dem die genannten Eingangsklemmen (13 bis 16) ausgebildet sind, und ein zweites Schaltgerät (2) umfasst, das mit dem ersten Schaltgerät (1) in Reihe geschaltet ist, so dass es durch dieses erste Schaltgerät geschützt ist, und in dem die genannten Ausgangsklemmen (17 bis 20) ausgebildet sind.

5. Schaltgeräteanordnung nach Anspruch 4, **dadurch gekennzeichnet, dass** das erste Schaltgerät (1) als Lastschalter, Fehlerstromschutzschalter, Leistungsschalter oder Fehlerstromleistungsschalter ausgebildet ist.

6. Schaltgeräteanordnung nach Anspruch 4 oder 5, **dadurch gekennzeichnet, dass** das zweite Schaltgerät (2) als Hilfsschalter oder Stromstoßrelais ausgebildet ist.

7. Schaltgeräteanordnung nach irgendeinem der Ansprüche 4 bis 6, **dadurch gekennzeichnet, dass** die Eingangsklemmen (13 bis 16) des ersten Schaltgeräts (1) über Kabel eingespeist werden, während die Ausgangsklemmen (17 bis 20) des zweiten Schaltgeräts (2) an eine Kammschiene P2 angeschlossen sind, die durch mindestens eine Einspeiseschiene gebildet wird und zur Stromversorgung weiterer Schaltgeräte dient.

8. Schaltgeräteanordnung nach irgendeinem der vorhergehenden Ansprüche, **dadurch gekennzeichnet, dass** das zweite Schaltgerät (2) auf seiner der anderen Seitenfläche (10) gegenüberliegenden Seitenfläche (9) eine weitere Gruppe von Ausgangsklemmen (44 bis 47) aufweist, die in herkömmlicher Weise als Abgänge dienen.

9. Schaltgeräteanordnung nach irgendeinem der Ansprüche 4 bis 8, **dadurch gekennzeichnet, dass** das zweite Schaltgerät (2) in umgekehrter Position auf der Tragschiene montiert werden kann, derart dass seine Ausgangsklemmen (17 bis 20 und 44 bis 47) entweder die Einspeisung einer Kammschiene auf einer Seite der Tragschiene oder die Einspeisung einer weiteren Gruppe von Schaltgeräten über Kabelverbindungen auf der anderen Seite der Tragschiene gewährleisten.

10. Schaltgeräteanordnung nach irgendeinem der vorhergehenden Ansprüche, **dadurch gekennzeichnet, dass** die Ausgangsklemmen (28 bis 35) des zweiten Schaltgeräts (2) und/oder die Eingangsklemmen (36 bis 43) des ersten Schaltgeräts (1) elektrisch mit einer Kammschiene P1, P3 verbunden sind, die nacheinander und in wiederkehrender Reihenfolge den Neutralleiter und die einzelnen Phasen p1, p2, p3 verteilen, wobei jeweils ein Zahn N zur Verteilung des Neutralleiters N zwischen zwei Zähnen zur Verteilung von zwei aufeinander folgenden Phasen ausgebildet ist und der Abstand zwischen zwei aufeinander folgenden Zähnen jeweils 9 mm beträgt.

11. Schaltgeräteanordnung nach irgendeinem der vorhergehenden Ansprüche, **dadurch gekennzeichnet, dass** die Breite 1 des freien Wandabschnitts E, parallel zur Flucht der Klemmen in der gleichen Tiefenebene gemessen, annähernd 18 mm beträgt.
